# EUROPEAN PATENT SPECIFICATION

(11) **EP 4 591 102 B1**
(45) Date of publication and mention of the grant of the patent: **28.10.2026**
(21) Application number: 23790138.4
(22) Date of filing: 18.09.2023
(51) Int. Cl.: G01V 99/00, G01V 1/30

(54) **AUTOMATED CELL-TO-CELL CALIBRATION OF SUBSIDENCE INFORMATION MAP IN FORWARD GEOLOGICAL MODELS**
AUTOMATISIERTE ZELL-ZU-ZELL-KALIBRIERUNG EINER ABSENKUNGSINFORMATIONSKARTE IN VORWÄRTS GEOLOGISCHEN MODELLEN
ÉTALONNAGE AUTOMATISÉ DE CELLULE À CELLULE DE CARTE D'INFORMATIONS DE SUBSIDENCE DANS DES MODÈLES GÉOLOGIQUES DIRECTS

(30) Priority: 21.09.2022 US 202217934075
(43) Date of publication of application: 30.07.2025
(73) Proprietor: Saudi Arabian Oil Company, Dhahran, 31311 (SA)
(72) Inventor: ALQATTAN, Hussain, Dhahran Heights Portable 9172 Dhahran, 31311 (SA); MEZGHANI, Mokhles M., Dhahran, 31311 (SA)
(74) Representative: Osha BWB
(86) International application number: PCT/US2023/033064
(87) International publication number: WO 2024/064095

(56) References cited:
- WO-A1-2020/198284
- O. FALIVENE ET AL: "Automatic calibration of stratigraphic forward models for predicting reservoir presence in exploration", AAPG (AMERICAN ASSOCIATION OF PETROLEUM GEOLOGISTS)BULLETIN, vol. 98, no. 9, 1 September 2014 (2014-09-01), US, pages 1811 - 1835, XP055725086, ISSN: 0149-1423, DOI: 10.1306/02271413028
- CHRISTOPHER SANGSTER ET AL: "Forward stratigraphic modelling of sediment pathways and depocentres in salt-influenced passive-margin basins: Lower Cretaceous, central Scotian Basin", BASIN RESEARCH, BLACKWELL, OXFORD, GB, vol. 31, no. 4, 18 March 2019 (2019-03-18), pages 728 - 753, XP071853997, ISSN: 0950-091X, DOI: 10.1111/BRE.12342

## Description

### BACKGROUND

Subsidence involves sinking of a ground surface relative to a fixed point and may occur due to natural or human-induced processes. Topography, or the physical features of the surface of the Earth, including elevation, may be strongly influenced by subsidence. Thicknesses and distributions of different sediments may also be influenced by localized subsidence.

Stratigraphic models may be used to simulate geological processes over time. Stratigraphic models may be useful in the oil and gas industry to aid in determining the location of potential hydrocarbon reservoirs. In such models, subsidence may be a highly influential parameter. Utilization of well-calibrated stratigraphic models may serve to lower uncertainty of maps and reservoir models, further enhancing the process of hydrocarbon exploration. Consequently, it becomes desirable to accurately estimate values related to subsidence which may be used as stratigraphic model inputs.

O. Falivene et al "Automatic calibration of stratigraphic forward models for predicting reservoir presence in exploration", AAPG (Amrican Association of Petroleum Geologists) Bulletin, vol. 98, no. 9, 1 September 2014, pages 1811-1835 discloses that stratigraphic forward model predictions can be significantly improved by calibrating the models to independent constraints, such as thicknesses from seismic or well data. A three-dimensional basin-scale stratigraphic forward-modeling tool is coupled with an inversion algorithm. The inversion algorithm is a modification of the neighborhood algorithm (a type of genetic algorithm), which is designed to sample complex multimodal objective functions and is parallelized on computer clusters to accelerate convergence. The process generates a set of representative geological models that are consistent with prior ranges for uncertain parameters, calibration constraints, and associated tolerance thresholds.

WO2020/198284 A1 discloses a method for geological modeling includes receiving a forward depositional model, determining a Latin Hypercube Sampling (LHS) stratigraphic model based on the projected forward depositional model, performing forward depositional modeling, transform the forward depositional model from time domain to stratigraphic-depth domain, determining one or more pseudo-wells based on the transformed model, determining a mismatch value based on the transformed forward depositional model and a collection of simulated physical value, and determining a kriging surrogate model based on the LHS stratigraphic model and the mismatch value.

C. Sangster et al, "Forward stratigraphic modelling of sediment pathways and depocentres in salt-influenced passive-margin basins: Lower Cretaceous, central Scotian Basin", Basin Research, Blackwell, vol. 31, no. 4, 18 March 2019, pages 728-753 discloses a study that uses forward stratigraphic modelling software and statistical analysis software to produce predictive stratigraphic models of the central Scotian Basin, test their sensitivity to different input parameters, assess proposed provenance pathways, and determine the distribution of sand and factors that control sedimentation in the basin.

### SUMMARY

The invention provides a computer-implemented method according to claim 1, a non-transitory computer readable memory according to claim 6 and a system according to claim 11. In the following, only embodiments including all the features of one of claims 1, 6 or 11 pertain to the invention. Specific embodiments are defined in the dependent claims

This summary is provided to introduce a selection of concepts that are further described below in the detailed description. This summary is not intended to identify key or essential features of the claimed subject matter, nor is it intended to be used as an aid in limiting the scope of the claimed subject matter.

In a first aspect, the present invention provides a computer-implemented method as defined in independent claim 1.

In a second aspect, the present invention provides a non-transitory computer readable memory as defined in independent claim 6.

In a third aspect, the present invention provides a system as defined in independent claim 11.

Other aspects and advantages of the claimed subject matter will be apparent from the following description and the appended claims.

### BRIEF DESCRIPTION OF DRAWINGS

Specific embodiments of the disclosed technology will now be described in detail with reference to the accompanying figures. Like elements in the various figures are denoted by like reference numerals for consistency.
FIG. 1 depicts a well environment in accordance with one or more embodiments.
FIG. 2 depicts depositional-related processes in accordance with one or more embodiments.
FIG. 3 depicts overburden stress and pore pressure in accordance with one or more embodiments.
FIG. 4 shows an observed stratigraphic thickness map and cross-sectional view in accordance with one or more embodiments.
FIG. 5 depicts bathymetric data collection in accordance with one or more embodiments.
FIG. 6 shows a flowchart in accordance with one or more embodiments.
FIG. 7 depicts functional relationships in accordance with one or more embodiments.
FIG. 8 shows a flowchart in accordance with one or more embodiments.
FIG. 9 shows a drilling system in accordance with one or more embodiments.
FIG. 10 depicts a computer system in accordance with one or more embodiments.

### DETAILED DESCRIPTION

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as using the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

It is to be understood that the singular forms "a," "an," and "the" include plural referents unless the context clearly dictates otherwise. Thus, for example, reference to "stratigraphic thickness map" includes reference to one or more of such maps.

Terms such as "approximately," "substantially," etc., mean that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It is to be understood that one or more of the steps shown in the flowchart may be omitted, repeated, and/or performed in a different order than the order shown. Accordingly, the scope disclosed herein should not be considered limited to the specific arrangement of steps shown in the flowchart.

Although multiple dependent claims may be introduced, it would be apparent to one of ordinary skill that the subject matter of the dependent claims of one or more embodiments may be combined with other dependent claims.

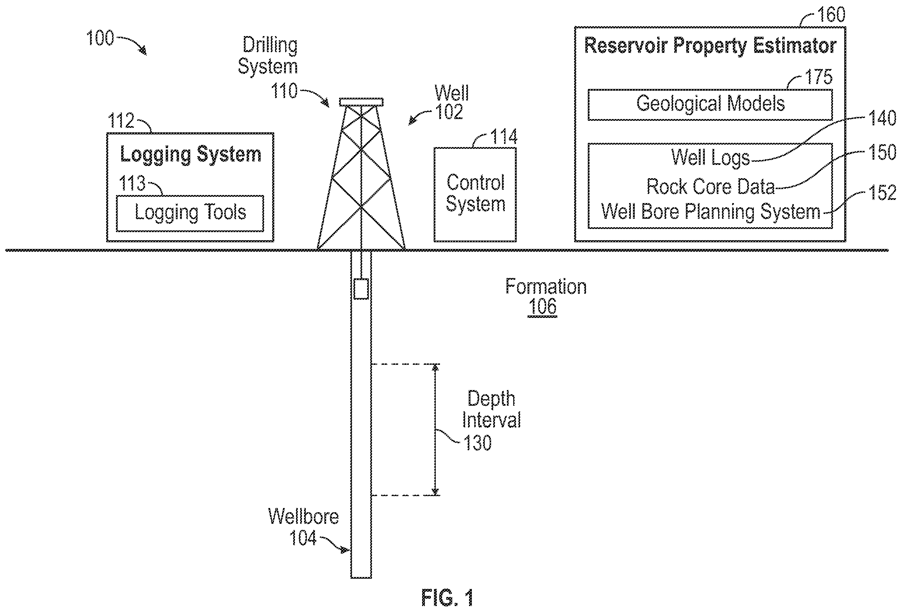

In the following description of FIGs. 1-10, any component described with regard to a figure, in various embodiments disclosed herein, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments disclosed herein, any description of the components of a figure is to be interpreted as an optional embodiment which may be implemented in addition to, in conjunction with, or in place of the embodiments described with regard to a corresponding like-named component in any other figure.

FIG. 1 depicts a well environment (100) in accordance with one or more embodiments. The well environment (100) may include a well (102) having a wellbore (104) extending into a formation (106). The wellbore (104) may include a bored hole that extends from a surface into a target zone of the formation (106) (106), such as a hydrocarbon reservoir, which may be considered a geological region of interest. The wellbore (104) may be vertical, highly deviated, or horizontal. The formation properties (106) may include various characteristics of interest, such as formation porosity, formation permeability, resistivity, density, water saturation, total organic content, volume of kerogen, Young's modulus, Poisson's ratio and the like. Porosity may indicate how much space exists in a particular rock within an area of interest in the formation (106), where oil, gas, and/or water may be trapped. Permeability may indicate the ability of liquids and gases to flow through the rock within the area of interest. Resistivity may indicate how strongly rock and/or fluid within the formation (106) opposes the flow of electrical current. For example, resistivity may be indicative of the porosity of the formation (106) and the presence of hydrocarbons. More specifically, resistivity may be relatively low for a formation (106) that has high porosity and a large amount of water, and resistivity may be relatively high for a formation (106) that has low porosity or includes a large volume of hydrocarbons. Water saturation may indicate the fraction of water in a given pore space.

In accordance with one or more embodiments, the well environment (100) may include a drilling system (110), a logging system (112), a control system (114), and a reservoir property estimator (160). The drilling system (110) may include a drill string, drill bit, a mud circulation system and/or the like for use in advancing the wellbore (104) into the formation (106). The drilling system (110) may drill a wellbore (104) along a wellbore trajectory, which may be determined using a wellbore planning system (152). The wellbore planning system (152) may be used to plan the wellbore trajectory, including the orientation and changes in diameter of the wellbore (104) along the trajectory and the angle of incidence at which the wellbore (104) enters the target zone of the formation (106). The wellbore planning system (152) may include a computer processor with hardware-appropriate software to plan an optimized wellbore trajectory. The wellbore planning system (152) may take as inputs such factors such as the available surface well locations or kick-off points, drilling target point coordinates, the maximum permissible curvature ("dog-leg, or "build-rate"), and geological and geomechanical constraints. The wellbore planning system (152) may further incorporate limitations such as maximum torque and drag, and the mechanical strength of the drill string, casing, bottomhole assemblies, logging tools (113), and completion strings.

The control system (114) may include hardware and/or software for managing drilling operations and/or maintenance operations. For example, the control system (114) may include one or more programmable logic controllers (PLCs) that include hardware and/or software with functionality to control one or more processes performed by the drilling system (110). Specifically, a programmable logic controller may control valve states, fluid levels, pipe pressures, warning alarms, and/or pressure releases throughout a drilling rig. In particular, a programmable logic controller may be a ruggedized computer system with functionality to withstand vibrations, extreme temperatures, wet conditions, and/or dusty conditions, for example, around a drilling rig. Without loss of generality, the term "control system" may refer to a drilling operation control system that is used to operate and control the equipment, a drilling data acquisition and monitoring system that is used to acquire drilling process and equipment data and to monitor the operation of the drilling process, or a drilling interpretation software system that is used to analyze and understand drilling events and progress.

In accordance with one or more embodiments, a reservoir property estimator (160) may include hardware and/or software with functionality for storing and analyzing well logs (140), core sample data (150), seismic data, and/or other types of data to generate and/or update one or more geological models (175). Geological models (175) may include geochemical or geomechanical models that describe structural relationships within a particular geological region, specifically including stratigraphic models. Stratigraphic models are physical process-based models in which geological processes are simulated utilizing mathematical equations. Stratigraphic models can be used to constrain interpretations of subsurface data.

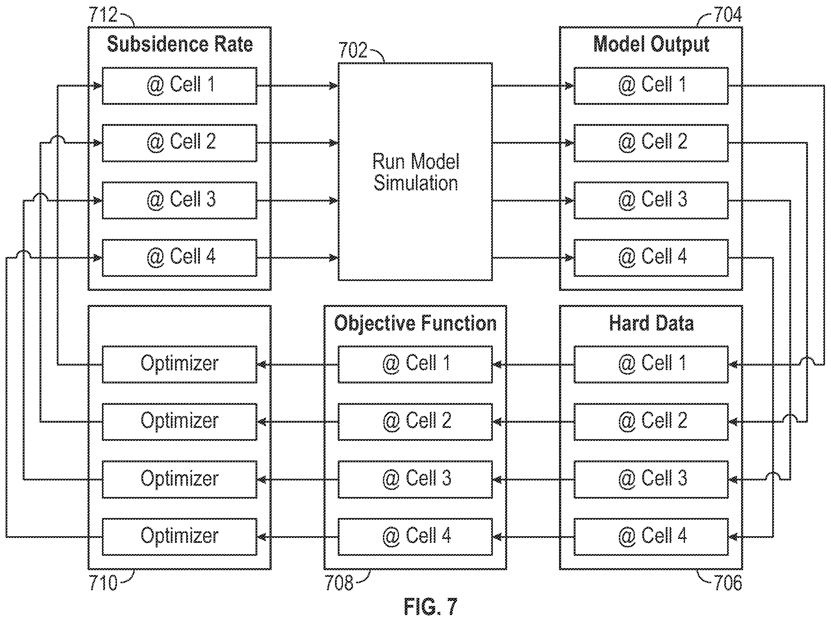

While the reservoir property estimator (160) is shown at a well site, in some embodiments, the reservoir property estimator (160) may be remote from a well site. In some embodiments, the reservoir property estimator (160) is implemented as part of a software platform for the control system (114). The software platform may obtain data acquired by the drilling system (110) and logging system (112) as inputs, which may include multiple data types from multiple sources. The software platform may aggregate the data from these systems (110, 112) in real time for rapid analysis. In some embodiments, the control system (114), the logging system (112), and/or the reservoir property estimator (160) may include a computer system that is similar to the computer system (702) further discussed in relation to FIG. 7 and the accompanying description.

The logging system (112) may include one or more logging tools (113), such as a nuclear magnetic resonance (NMR) logging tool and/or a resistivity logging tool, for use in generating well logs (140) of the formation (106). For example, a logging tool may be lowered into the wellbore (104) to acquire measurements as the tool traverses a depth interval (130) (e.g., a targeted reservoir section) of the wellbore (104). The plot of the logging measurements versus depth may be referred to as a "log" or "well log". Well logs (140) may provide depth measurements of the wellbore (104) that describe such reservoir characteristics as formation porosity, formation permeability, resistivity, density, water saturation, total organic content, volume of kerogen, Young's modulus, Poisson's ratio, and the like. The resulting logging measurements may be stored and/or processed, for example, by the control system (114), to generate corresponding well logs (140) for the well (102). A well log (140) may include, for example, a plot of a logging response time versus true vertical depth (TVD) across the depth interval (130) of the wellbore (104).

Reservoir characteristics may be determined using a variety of different techniques. For example, certain reservoir characteristics can be determined via coring (e.g., physical extraction of rock samples) to produce core samples and/or logging operations (e.g., wireline logging, logging-while-drilling (LWD) and measurement-while-drilling (MWD)). Coring operations may include physically extracting a rock sample from a region of interest within the wellbore (104) for detailed laboratory analysis. For example, when drilling an oil or gas well, a coring bit may cut plugs (or "cores" or "core samples") from the formation (106) and bring the plugs to the surface, and these core samples may be analyzed at the surface (e.g., in a lab) to determine various characteristics of the formation (106) at the location where the sample was obtained.

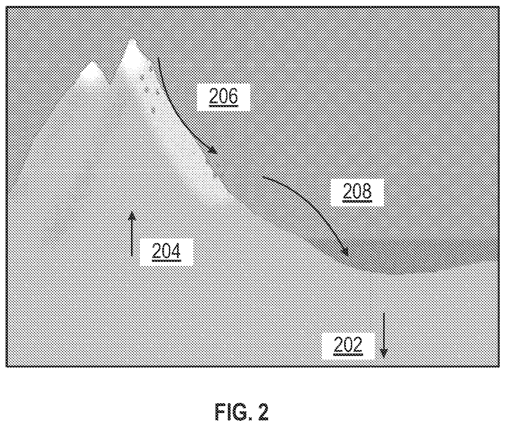

FIG. 2 depicts subsidence-related processes in accordance with one or more embodiments. Subsidence (202) involves sinking of a ground surface relative to a fixed reference point. Subsidence may refer to the surface of the earth or a boundary of a geological formation (106). Subsidence (202) may occur naturally, as a result of tectonic activity. Tectonic activity involves interactions between the brittle plates of the lithosphere, the outer layers of Earth's crust, and the underlying softer asthenosphere, the relatively plastic layer of Earth's upper mantle, resulting in changes which may be observed at the Earth's surface. Tectonic activity may result in subsidence (202) of the Earth's surface above active faults, where rocks show observable displacement due to tectonic activity. Subsidence (202) may also be observed in areas where fluid may be expelled or withdrawn from underlying sediments. Subsidence (202) induced by human activity may be a result of withdrawal of underground fluids such as water or hydrocarbons, which may include oil or gas. In this scenario, although the weight of overlying rock layer, otherwise known as overburden, remains constant, the decreasing pore fluid pressure due to removal of fluids creates an increase in effective stress, thereby producing deformation (106) in the exploited underground layers. This deformation (106) may result in reservoir compaction, which may be further transmitted to the ground surface, potentially manifesting as subsidence.

Subsidence (202) due to natural processes may occur as a result of weathering or tectonic phenomena, such as earthquakes or volcanic activity. Weathering describes the breaking down or dissolving of rocks and minerals at the surface of the Earth. Weathering involves physical, chemical, and biological processes which facilitate this breakdown. Water, ice, acids, salts, plants, animals, and changes in temperature are all agents of weathering. Weathering may also cause neighboring subsurface layers to collapse, further promoting subsidence (202) due to weight of overburden.

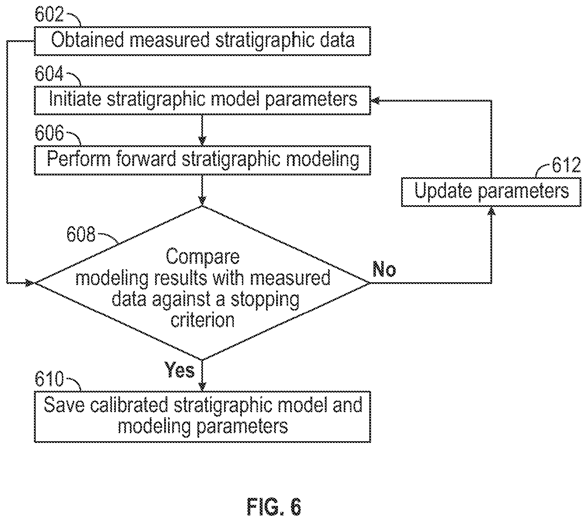

Subsidence (202) may be measured using various techniques, such as a geodetic survey system, which utilizes fixed points, corrected for the curvature of the surface of the Earth, to estimate subsidence (202) across designated surface areas. Subsidence (202) may produce areas in which sediments may accumulate. These areas may ultimately form sedimentary basins. Subsidence (202) can also be an effect of sediment loading, which occur when the weight of overlying sediment exceeds the resistive strength of underlying strata, resulting in supportive yielding and subsequent subsidence. Due to the interplay between subsidence, sediment thickness, and sediment distribution, it can be useful to incorporate subsidence (202) as stratigraphic modeling input, which is further discussed in reference to FIG. 6.

Uplift (204) is defined as an upward vertical displacement and is the consequence of forces working against gravity. Uplift (204) may be regarded as the opposite of subsidence (202). Uplift (204) may be observed at the surface of the Earth and may be measured relative to a reference level, for example mean sea level. Causes of uplift (204) may be divided broadly into thermal, loading, and stress-based factors, although all may operate to varying degrees. For example, heating of a region from below by a hot upwelling mantle plume may produce a reduction in density of the overlying rock. The isostatic response to these density variations may lead to vertical motion of a ground surface, or uplift (204). Alternatively, the melting of ice sheets may produce uplift of the rock formations below the melted sheets (so-call "post-glacial rebound" or "isostatic rebound"). Further, compressive tectonic forces, such as at the collision of tectonic plates, may produce significant uplift. For example, the collision between the Indian and Eurasian plates is responsible for the Himalaya mountain range, and the collision between the African and Eurasian plates has produced the Alps.

Erosion (206) is a geological process involving Earth materials, which may be worn away at the surface, being transported to a different location by natural forces such as wind, water, ice, abrasive solid particles, or by mass-wasting events, such as rockfalls and landslides. Erosion generally leads to a lowering of Earth's surface with respect to sea level. Erosion (206) may operate in conjunction with weathering, to include the transportation of weathered material. Rates of erosion may often be linked to tectonic setting, bedrock character of the source area, and climate. The products of erosion may eventually be deposited in a sedimentary basin. For example, relatively softer sedimentary rocks may erode fast the relatively harder volcanic or metamorphic rocks. Similarly, erosion may be accelerated in wet climates, or climates subjected to repeated cycles of freezing and thawing, compared to drier and more temperate climates. In a sedimentary basin, the observed stratigraphy may be indicative of the rate of sediment influx supplied by erosional processes, which itself depends on factors such as relief, slope, climate, lithology, vegetation, runoff, and changes to the sediment source region.

Deposition (208) involves the accumulation of sediments, typically generated by erosion (206), *i.e.,* by one or more of the erosional processes described above. The sediment produced by weathering and erosion in the form of pebbles, gravel, sand, and silt may subsequently be deposited in sedimentary environments, such as river flood plains, lake beds and ocean basins. Deposition requires space ("accommodation space") in which to accumulate. Accommodation space, the physical space available for sediments to potentially deposit and accumulate, may change over time as a result of sea level fluctuations, tectonic activity, or compaction. Further, loading of the lithosphere due to weight of deposited sediment may also cause subsidence.

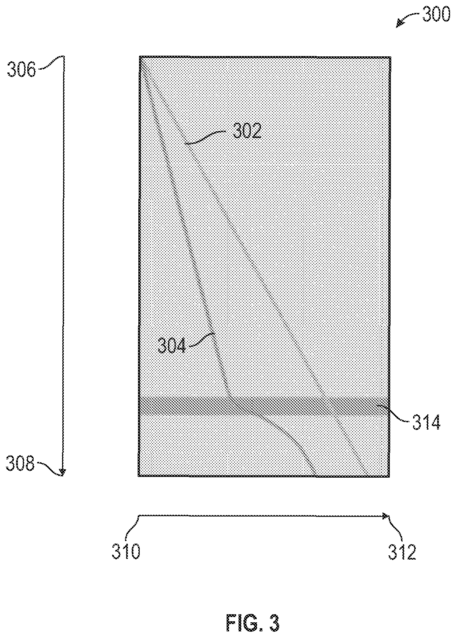

FIG. 3 depicts overburden stress (302) and pore pressure (304) in accordance with one or more embodiments. Whereas subsidence (202) is a change of level of a surface, areas experiencing subsidence may also experience compaction, which is a volumetric change that may be experienced by a subsurface formation, including a hydrocarbon reservoir, due to the combined weight of overlying rocks.

In accordance with one or more embodiments, in a porous medium, such as a hydrocarbon-producing formation (106), fluid may be contained within its solid structure. Over time, as more sediment accumulates above the formation (106), the formation (106) must support the added weight of the new material, which may be deposited via the depositional processes discussed in relation to FIG. 2. As burial depth of the formation (106) increases from a minimum depth (306) to a maximum depth (308), the weight of overlying sediment, or overburden, also increases, increasing pressure of the fluid within the formation (106) from a minimum pressure (310) to a maximum pressure (312). When fluid is produced from a reservoir, the weight of the overburden does not decrease, but the pore pressure (304) does, thereby increasing the vertical effective stress acting on the solid matrix, resulting in compaction of the reservoir. It should be noted, however, that compaction further depends on the compressibility of the rock material and boundary conditions.

In accordance with one or more embodiments, the overburden stress (302) on a formation (106) increases with depth due to the increasing weight of overburden. The overburden stress (302) on the formation (106) may be determined by accounting for the density of the overburden. Pore pressure (304) within the formation (106) also increases with depth. Beneath an impermeable stratum (314), the pore fluid becomes increasingly pressurized as the formation (106) compacts under additional weight, without having the ability to release the pore fluid.

In accordance with one or more embodiments, the decrease in volume caused by a buried formation (106) that becomes compacted may often be transmitted to the ground surface and expressed as subsidence. The physical extent of the surface expression of subsidence (202) is generally wider than the compacted area of the formation (106), depending on the material properties of the overburden and depth of the compacted formation (106).

In accordance with one or more embodiments, the effects of subsidence (202) and compaction can cause damage to wells and production facilities. Conversely, subsidence (202) and compaction may also cause an increase or decrease in formation (106) permeability due to opening and closing of new fracture spaces. Therefore, drilling and completions decisions, including those related to wellbore trajectories, may be enhanced by accounting for factors including subsidence.

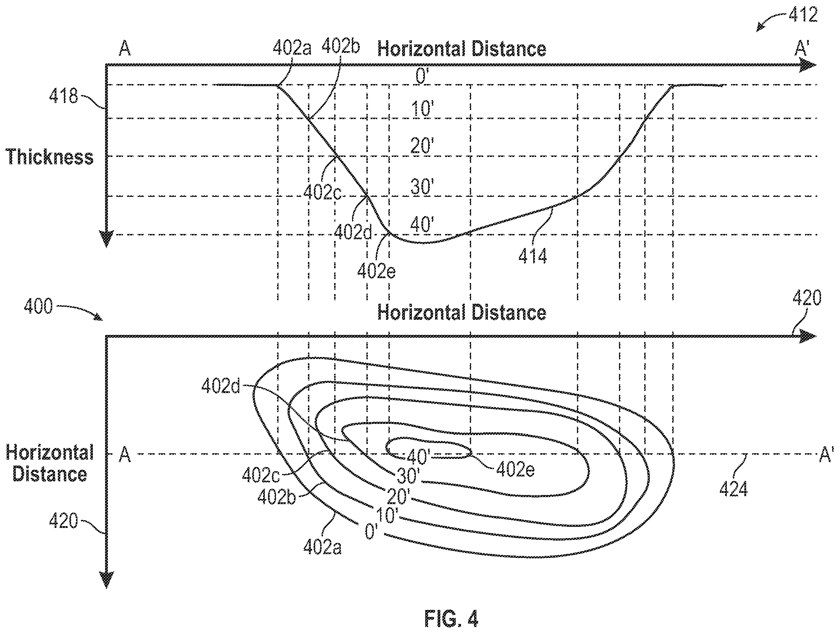

FIG. 4 shows an observed stratigraphic thickness map and cross-sectional view in accordance with one or more embodiments. Stratigraphic thickness maps are often used to illustrate thickness variations within a stratigraphic layer, *i.e.,* the change in thickness with horizontal location. The observed stratigraphic thickness map may reflect observed thicknesses of stratigraphic layers obtained from measurable field data. The observed stratigraphic thickness map may include at least one of sediment thickness or sediment type. Sediment thickness and sediment type may be obtained from one or more sources such as rock core data (150), seismic data, and well logs (140). Stratigraphic thicknesses of sedimentary units are commonly bound by geologic time horizons that correspond to sediment having been deposited at a common moment in geological time. Variability in stratigraphic thicknesses may stem from variations in geological processes, such as sediment flux, glacial cycles, and available accommodation space. A stratigraphic layer observed within a stratigraphic thickness map may be considered a subdivision of the sedimentary basin in which it is contained.

In accordance with one or more embodiments, stratigraphic thickness maps play an important role in stratigraphic modeling. Stratigraphic models mathematically model stratigraphic layers over geological time, which may be considered past, present, and/or future. The stratigraphic model may predict changes in sediment thickness, sediment volume, accommodation space, and rock type due to subsidence, erosion, uplift, and deposition.

A stratigraphic thickness map may take the form of an isopach map or an isochore map. An isopach map may also be referred to as true stratigraphic thickness map. An isopach map represents the true thickness of a stratigraphic unit, even when tilted, and is measured as the shortest distance between the upper and lower boundary of the stratigraphic unit. In contrast, an isochore map, also known as a true vertical thickness map, shows the vertical thickness of a stratigraphic unit. If the stratigraphic unit were horizontal, this would be the same as a true stratigraphic thickness map. However, if the stratigraphic unit may have a dip or incline, the true vertical thickness is different from the true stratigraphic thickness.

In accordance with one or more embodiments, FIG. 4 shows an isopach map (400) displaying true stratigraphic thickness of stratigraphic layers. For example, the isopach map (400) may display a plan view of an example hydrocarbon reservoir. The isopach map (400) illustrates thickness variations as a function of horizontal position, indicated by the axes (420) and (422). For example, axis 420 may indicate distance in the North-South direction and (422) distance in the East-West direction. The isopach map (400) displays true stratigraphic thickness using contour lines (402a-402e) each of which connect equal values of the true stratigraphic thickness across the area covered by the isopach map (400). Each contour line (402a-402e) separates points of higher value on one side of the contour from points of lower value on the other side. The contours display sediment thickness increasing from a minimum thickness (402a) to a maximum thickness (402e), expressed in units of feet (where 1 foot= 0.3048 meters). The contour interval, or value of the separation between two adjacent contours, is 10 feet (3.048 meters). Contour intervals may be designated according to map scale and the available amount and distribution of data points.

FIG. 4 also shows a cross-sectional view (412) along the line A-A' (424)).The cross-sectional view (412) shows the stratigraphic thickness (414) of the stratigraphic layer along the vertical plane containing the line A-A' (424). The stratigraphic thickness is indicated on the vertical axis (418). It is emphasized that the vertical axis (424) shows stratigraphic thickness, not vertical distance from a datum such as the surface of the earth, or any other horizontal datum. The upper and lower boundaries of the stratigraphic layer may themselves be either convex or concave upwards, or undulating, without departing from the scope of the invention as defined by the claims.

Quantitative modeling of sedimentary sequences may be performed using a forward stratigraphic modeler that models geological processes in a controlled environment. These geological processes include, without limitation, clastic sediment flux from rivers, and wind, in-situ carbonate sediment production, sea level fluctuations, wave activity, and subsidence. Modeling may be based on well-established observations of geological phenomena in the field and laboratory experiments.

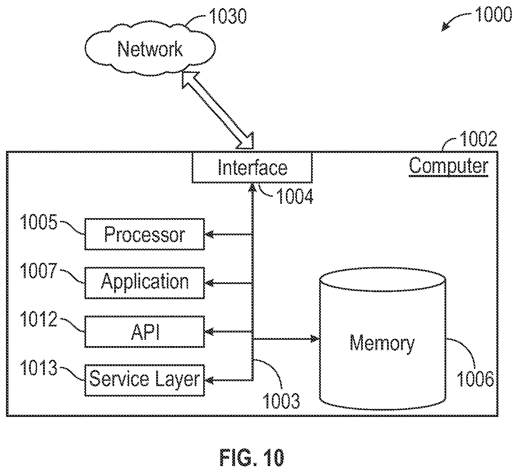

While such a forward stratigraphic modeler may sometimes by a physical scale model, such as a flume-tank, in most cases a forward stratigraphic modeler includes a computer system (such as the computer system shown in FIG. 10) and appropriate software. In some embodiments, the computer system and software may be configured to solve a set of equations that encapsulate the physics of fluid flow, (Bernoulli's Equation, Euler's Equation, Navier-Stoke's Equation) and sediment transport (the Diffusion Equation). In other embodiments, the equations may encapsulate heuristic relationships, where relationships between parameters, such as fluid velocity and sedimentation rate are known, e.g., from experiment, or assumed, even though physics-based understanding is incomplete. A forward stratigraphic modeler may use a combination of physics-based and heuristic relationships.

Forward stratigraphic modelers may be divided into three main groups and a combined class. Hydraulic process-response models solve physics-based equations for three-dimensional sediment transport and deposition. This group typically uses solutions to the Navier-Stokes equation or simplifications thereof to model fluid flow and sediment transport and deposition by the modeled flow is governed by factors including bed-roughness, flow rate and depth together with a number of heuristic parameters. In contrast, topographic-control models, including diffusion and potential-gradient variants, model transportation and deposition of sediments based on the potential gradient of the pre-existing, and continuously temporally changing sediment or streambed surface. These models are based on diffusion type equations including Darcy's Law and Ohm's Law. Geometric models do not describe the transport and deposition themselves but the geometric result of these processes, such as the rates of filling or partially-filling accommodation spaces. Geometric models incorporate relationships between sediment shape, sediment supply volume, rate of subsidence, rate of sediment dispersal, and the nature, e.g., grain size, of the sediment supply. In addition to these three broad categories of methods, hybrid methods may be used that incorporate physics-based, heuristic and fuzzy-log models. These hybrid methods may switch between different approaches for varying conditions. For example, large scale clastic features may use geometric or diffusion methods while carbonate deposition may use a partial process model and treat coal deposition heuristically.

In common with all modeling processes, specifying the functional relationships between inputs and outputs do not fully constrain the output values. In addition, boundary or initial conditions are required. (By analogy, the trajectory of a ball in flight is governed by Newton's laws of motion, the functional relationships, but how high or far the ball travels depend on the velocity with which it is thrown, the boundary condition). In the context of forward stratigraphic modeling the outputs, e.g., the rate and thickness of sediment accumulation, depend on the boundary conditions such as, without limitation, the rate and type of sediment supply, the flow rate of rivers discharging into the modeled sedimentary basins, changes of sea-level over the geological time covered by the modeling, and fluctuation in seawater temperature (particularly for carbonate deposition).

In accordance with one or more embodiments, key inputs to forward stratigraphic modeling may be the initial topography of the water bottom, such as the seabed, at the beginning of the period of geological time to be modeled, and the subsidence rates of the period of geological time. The initial tomography of the water bottom may be called the bathymetry and is typically defined relative to a horizontal reference datum, such as mean-sea level. Increases in the bathymetry over geological time may be caused subsidence or by raising of mean sea-level (that may itself be a result of glacial melting). Decreases in the bathymetry may be caused by crustal uplift (caused by tectonic movement, or thermal heating from the mantle), localized volcanic activity, biological processes, such as reef building, rates of sediment deposition exceeding rates of subsidence, or falling mean sea-level.

Forward stratigraphic modeling may be used to address various problems in hydrocarbon reservoir exploration and development. For example, the geological formations adjacent to a prehistoric canyon currently buried in the subsurface may or may not contain hydrocarbons. A hydraulic process model, using an initial topographic model of the canyon obtained from seismic images, estimated sediment type, and estimated frequency and volume of turbidity flows and sediment concentrations in the flow, may be used to simulate past deposition of sediment in the canyon. Sensitivity studies using the hydraulic process model may indicate that deposition rates are insensitive to initial sediment type but very sensitive to turbidite flow volume. Multiple forward modeling scenarios may be used to provide a best fit to the measured sediment geometry and the best fit parameters may then be used to predict the extent and shape of sediment fans deposited beyond the mouth of the canyon and suggest promising exploratory drill targets.

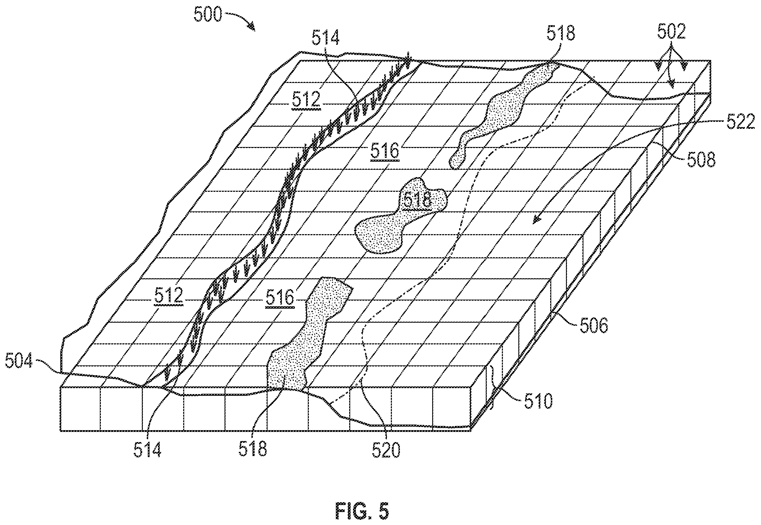

FIG. 5 shows a depositional environment (500) and a stratigraphic model made up of a plurality of stratigraphic model cells (502) used to represent the deposition occurring within the depositional environment (500). The sediments deposited in the depositional environment (500) may, in large part, be controlled by the tomographic elevation (504) of the land surface or the depth of the seabed (506). Commonly the depth of the seabed (506) below a datum such as the mean sea-level (508) may be referred to as the bathymetry (510), *i.e.,* the variation of water depth with position. The depositional environment (500) may include a coastal plain (512), where little or no deposition may occur, a tidal zone (514) such as a marsh, delta or beach, where coals, shales or sandstones may be deposited. The depositional environmental (500) may also include lagoons (516) separated by reefs (518) from a transition (520) to deeper water (522). Carbonates of various may be deposited in these zones. For example, mudstones and wackestones may be deposited in the calm waters of the lagoon (516) and packstone and grainstone may be deposited in the more energetic currents and waves on either side of the reefs (518) with the reefs themselves forming boundstone.

The stratigraphic model may be made up of a plurality of stratigraphic model cells (502) each of which may be assigned an initial bathymetry or topography and a subsidence rate that may control the subsequent type and volume of sediment deposition over the interval of geological time modelled.

Inverse stratigraphic modeling, or stratigraphic model optimization, involves iterative or recursive forward stratigraphic modeling, comparison of the modeling results with measured stratigraphic data, and updating of the modeling inputs, until a stopping criterion, such as a satisfactory match between modeling results and measured data, or a maximum number of iterations, is achieved. FIG. 6 shows a simplified workflow for performing inverse stratigraphic model.

In Step 602 measured stratigraphic data may be obtained. Measured data may include measurements on thicknesses of stratigraphic layers and measurements of stratigraphic types. For example, maps of stratigraphic layer thickness may be obtained from seismic images that may be calibrated by well log measurements made in wellbores penetrating the stratigraphic layers. Similarly, stratigraphic types may be obtained from petrophysical and paleontological analysis of core samples obtained from wellbores penetrating the stratigraphic layers.

In Step 604, in accordance with one or more embodiment, forward stratigraphic modeling parameters may be initiated for each cell (502) of the stratigraphic model. For example, modeling parameters may include initial water depth or bathymetry (510) and subsidence rates for each cell (502).

In Step 606, forward stratigraphic modeling may be performed using a forward stratigraphic modeler. The forward stratigraphic modeler takes the modeling parameters as inputs and output predicted stratigraphic data such as predicted maps of stratigraphic layer thickness and stratigraphic types.

In Step 608 the measured stratigraphic layer data may be compared with the predicted stratigraphic layer data and a decision may be made on whether a stopping criterion has been satisfied. The stopping criterion may be in the form of an objective function measuring the difference between the measured and predicted stratigraphic layer data. For example, the magnitude of the difference may be compared against a predetermined value. Alternatively, the change in the magnitude of the difference may be evaluated against a predetermined value. Finally, the stopping criterion may simply be the number of iterations of steps 604, 606, and 608 have been performed.

If the stopping criterion has been satisfied the stratigraphic model and the stratigraphic modeling parameters satisfying the criterion may be saved in step 610 as a calibrated stratigraphic model and the stratigraphic modeling parameters. However, if the stopping criterion has not been satisfied the stratigraphic modeling parameters (612) may be updated and the next iterative or recursive loop including steps (604), (606), and (608) may be performed using these updated parameters.

In accordance with the invention, the stopping criterion is evaluated on a cell-by-cell basis. If any individual cell satisfies the stopping criterion it is assigned to the calibrated stratigraphic model and excluded from the next iteration of the iterative or recursive loop that the neighboring cells undergo.

Unconstrained optimization in forward stratigraphic modeling may be prohibitively computationally expensive particularly due to the cost of repeated invocation of the forward stratigraphic modeling step that incurs the majority of the computation cost of each iterative loop. In accordance with one or more embodiments, FIG. 7 depicts a workflow for performing inverse stratigraphic modeling at a reduced computational cost, thus rendering it feasible. In the interests of clarity FIG. 7 illustrates a workflow for four stratigraphic model cells. However, in general, the workflow may be performed for a greater number, sometimes much greater, of cells without departing from the scope of the invention as defined by the claims.

The workflow loop depicted in FIG. 7 may be regarded as beginning with the simulation of the stratigraphic model in Step 702 based upon current values of the stratigraphic modeling parameters. The forward stratigraphic simulation produces a modeling output (704). The modeling output may include a stratigraphic thickness, stratigraphic type, and bathymetry prediction for each cell of the model. The model output (704) may be compared with measured stratigraphic data, sometime called "hard data" (706). In Step 708 an objective function is formed for each cell to quantify the difference between measured and predicted stratigraphic data. For example, the objective function may constitute a weighted least-squares difference between the measured and predicted values for each of the various categories of stratigraphic data. The objective function is evaluated and optimized for each cell of the model individually for each cell of the model to produce a unique subsidence rate for each cell in Step 712. Further, the optimizer may determine which cells in the model may be deemed to satisfy the stopping criterion. A cell which meets the stopping criterion is removed from the iterative loop and added to a calibrated stratigraphic model, while the updated modeling parameters (e.g., subsidence rate) are used in a new iteration of the workflow loop shown in FIG. 7, beginning with a new forward stratigraphic modeling Step 802. It is important to note the advantages in reduced computational cost of only running the resource intensive forward stratigraphic modeling step once in each iteration of the loop, rather than once per cell per loop as may be considered the conventional approach.

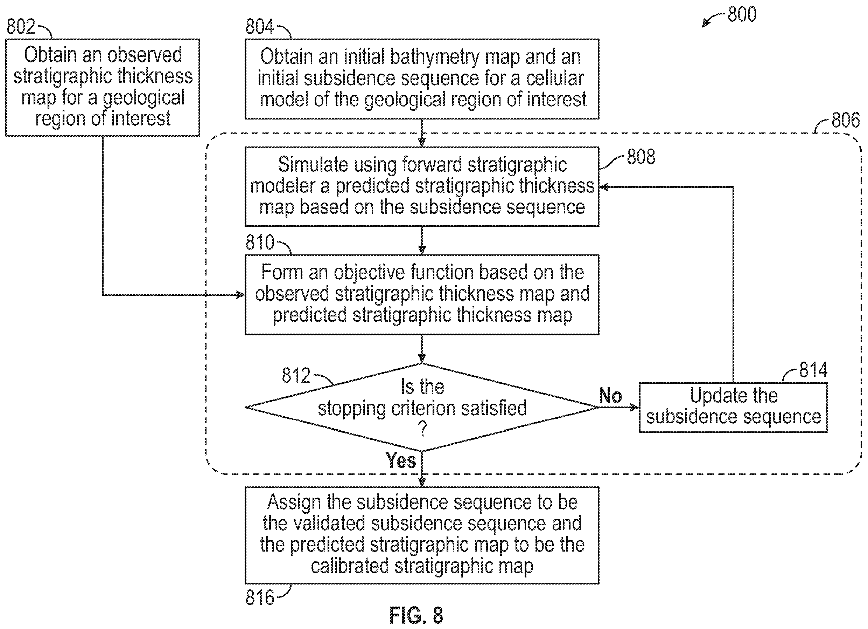

FIG. 8 shows a flowchart (800) in accordance with one or more embodiments. Specifically, the flowchart (800) describes a method of obtaining a calibrated stratigraphic map.

In Step 804, an initial bathymetry map and an initial subsidence sequence are obtained for a geological region of interest. The initial subsidence sequence includes a subsidence rate for each cell, with the value of the rate varying from one cell to another. The initial bathymetry map comprises a depth relative to a datum (504) for a plurality of spatial locations on a surface of an earth above the geological region of interest. The initial subsidence sequence may represent rates of changing topographic relief, whether positive or negative, across the geological region of interest. The initial subsidence sequence may be expressed as depth relative to the datum (504).

In Step 802, an observed stratigraphic thickness map is obtained for the geological region of interest. The observed stratigraphic thickness map may include a stratigraphic layer thickness and/ or a sediment type. The observed stratigraphic thickness map may include a plurality of values represent the measured stratigraphic thickness for each cell of a model input.

In Step 808, a predicted stratigraphic thickness map is simulated based on the initial subsidence sequence obtained in Step 802. The predicted stratigraphic thickness map is determined using a forward stratigraphic modeler. The forward stratigraphic modeler may take the form of a computer system with software configured to quantitatively simulate the geological processes that lead to deposition of sediment within the simulated model. These geological processes include, without limitation, clastic sediment flux from rivers, and wind, in-situ carbonate sediment production, sea level fluctuations, wave activity, and subsidence. The forward stratigraphic modeler may use physics-based or heuristic equations, or a combination of the two.

In Step 810, an objective function is formed based, at least in part, on the observed stratigraphic thickness map and the predicted stratigraphic thickness map. The objective function may be based on a difference between the observed stratigraphic thickness map and the predicted stratigraphic thickness map. For example, the objective may be based on the least-squares difference. In accordance with the invention a separate objective function is calculated for each cell in the stratigraphic model.

In Step 812, the objective function for each cell is evaluated against a stopping criterion. In some embodiments, the stopping criterion may a predetermined value of the objective function. In other embodiments, the stopping criterion may be a rate of change of the objective function from a preceding iteration of the iteration loop (806) discussed below. Alternatively, the stopping criterion may be a maximum number of iterations of the iteration loop (806).

In cases where the stopping criterion is not satisfied the subsidence sequence may be updated in Step 814 before the iterative loop (806) may return to the re-simulation of the predicted stratigraphic thickness in Step 808. The subsidence sequence may be updated to produce a better match between the predicted stratigraphic thickness and the measured predicted stratigraphic thickness. The updating may be performed by any of a plurality of mathematical optimization techniques familiar to a person of ordinary skill in the art without departing from the scope of the invention as defined by the claims. For example, trial- and-error, Monte-Carlo simulation, simulated annealing, or gradient-based methods may be used.

In addition, in some embodiments, the updates to the subsidence sequence may be constrained to be of the form:
*new subsidence rate = old subsidence rate * p*₁ + *p*₂ Equation (1) where *p*₁ and *p*₂ are optimization parameters. *p*₁ may represent the variance of the subsidence rate across cells of the model, while *p*₂ may represent a mean value of all subsidence rate values across the geologic region of interest, or mean subsidence sequence.

Steps 808, 810, 812, and 814 together make up the iterative loop 806. In some examples not-encompassed by the wording of the claims, the stopping criterion may be satisfied collectively for the whole stratigraphic model. However, in the invention, the stopping criterion is evaluated for each cell of the stratigraphic model independently and cells that satisfy the stopping condition leave the iterative loop and transition to Step 816 leaving only those cells that fail to satisfy the stopping criterion in Step 812 for further updating in additional iterations of the iterative loop (806).

In Step 816, the cells satisfying the stopping criterion are assigned to be a validated subsidence sequence. When all the cells have satisfied the stopping criterion in Step 812 and moved to the validated subsidence sequence the iterative loop (806) terminates.

In one or more embodiments, the calibrated stratigraphic map may be used to aid in determining the likely location of producible hydrocarbons in a geological region of interest by lowering uncertainty of maps and reservoir models. For example, the validated stratigraphic model may be used to predicted the thickness of desirable stratigraphic type ("facies") having porosity, permeability, and organic content characteristics advantageous for hydrocarbon production.

The likely location of hydrocarbons may include the latitude, longitude, and depth extents of the hydrocarbons or, in other words, the spatial extent of the reservoir in all three dimensions. These locations may in turn be used to identify drilling targets to drill a wellbore (104) to produce the hydrocarbons to the surface.

Prior to the commencement of drilling, a wellbore plan may be generated. The wellbore plan may include a starting surface location of the wellbore, or a subsurface location within an existing wellbore, from which the wellbore may be drilled. Further, the wellbore plan may include a terminal location that may intersect with the targeted hydrocarbon bearing formation and a planned wellbore path from the starting location to the terminal location.

Typically, the wellbore plan is generated based on best available information at the time of planning from a geophysical model, geomechanical models encapsulating subterranean stress conditions, the trajectory of any existing wellbores (which it may be desirable to avoid), and the existence of other drilling hazards, such as shallow gas pockets, over-pressure zones, and active fault planes. Furthermore, the wellbore plan may consider other engineering constraints such as the maximum wellbore curvature ("dog-log") that the drillstring (906) may tolerate and the maximum torque and drag values that the wellbore drilling system (900) may tolerate.

A wellbore planning system (950) may be used to generate the wellbore plan. The wellbore planning system (950) may comprise one or more computer processors in communication with computer memory containing the geophysical and geomechanical models, information relating to drilling hazards, and the constraints imposed by the limitations of the drillstring (906) and the wellbore drilling system (900). The wellbore planning system (950) may further include dedicated software to determine the planned wellbore path (902) and associated drilling parameters, such as the planned wellbore diameter, the location of planned changes of the wellbore diameter, the planned depths at which casing will be inserted to support the wellbore and to prevent formation fluids entering the wellbore, and the drilling mud weights (densities) and types that may be used during drilling the wellbore.

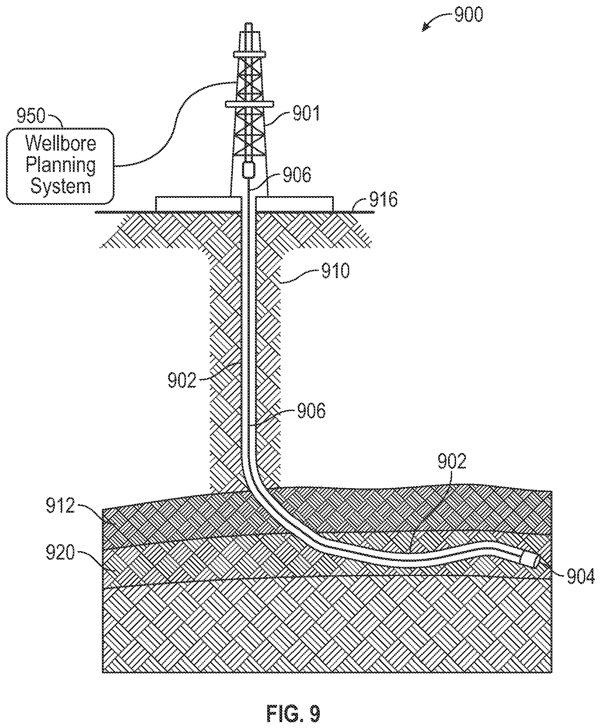

FIG. 9 shows a well drilling system (900) in accordance with one or more embodiments. A wellbore may be drilled using a drilling system (900) including a drill rig (901) that may be situated on a land drill site, an offshore platform, such as a jack-up rig, a semi-submersible, or a drill ship. The drill rig (901) may be equipped with a hoisting system, which can raise or lower the drillstring (906) and other tools required to drill the well. The drillstring (906) may include one or more drill pipes connected to form conduit and a bottom hole assembly (BHA) disposed at the distal end of the drillstring (906). The BHA may include a drill bit (904) to cut into subsurface rock. The BHA may further include measurement tools, such as a measurement-while-drilling (MWD) tool and logging-while-drilling (LWD) tool. MWD tools may include sensors and hardware to measure downhole drilling parameters, such as the azimuth and inclination of the drill bit, the weight -on-bit, and the torque. The LWD measurements may include sensors, such as resistivity, gamma ray, and neutron density sensors, to characterize the rock formation surrounding the wellbore. Both MWD and LWD measurements may be transmitted to the surface (916) using any suitable telemetry system, such as mud-pulse or wired-drill pipe, known in the art.

To start drilling, or "spudding in" the well, the hoisting system lowers the drillstring (906) suspended from the drill rig (901) towards the planned surface location of the wellbore. An engine, such as a diesel engine, may be used to rotate the drillstring (906). The weight of the drillstring (906) combined with the rotational motion enables the drill bit to bore the wellbore.

The near-surface is typically made up of loose or soft sediment or rock, so large diameter casing, e.g., "base pipe" or "conductor casing," is often put in place while drilling to stabilize and isolate the wellbore. At the top of the base pipe is the wellhead, which serves to provide pressure control through a series of spools, valves, or adapters. Once near-surface drilling has begun, water or drill fluid may be used to force the base pipe into place using a pumping system until the wellhead is situated just above the surface (916) of the earth.

Drilling may continue without any casing once deeper more compact rock is reached. While drilling, drilling mud may be injected from the surface (916) through the drill pipe. Drilling mud serves various purposes, including pressure equalization, removal of rock cuttings, or drill bit cooling and lubrication. At planned depth intervals, drilling may be paused and the drillstring (906) withdrawn from the wellbore. Sections of casing may be connected and inserted and cemented into the wellbore. Casing string may be cemented in place by pumping cement and mud, separated by a "cementing plug," from the surface (916) through the drill pipe. The cementing plug and drilling mud force the cement through the drill pipe and into the annular space between the casing and the wellbore wall. Once the cement cures drilling may recommence. The drilling process is often performed in several stages. Therefore, the drilling and casing cycle may be repeated more than once, depending on the depth of the wellbore and the pressure on the wellbore walls from surrounding rock. Due to the high pressures experienced by deep wellbores, a blowout preventer (BOP) may be installed at the wellhead to protect the rig and environment from unplanned oil or gas releases. As the wellbore becomes deeper, both successively smaller drill bits and casing string may be used. Drilling deviated or horizontal wellbores may require specialized drill bits or drill assemblies.

In other embodiments, completion decisions such as where and how to hydraulically fracture the formation (106) or where to acidize the formation (106) to enhance production may be made based, at least in part, on the validated stratigraphic model. In still further embodiments, surface production facilities such as pipelines and gas-oil separation plants may be determined based upon the calibrated stratigraphic model.

FIG. 10 depicts a block diagram of a computer system (1002) used to provide computational functionalities associated with described machine learning networks, algorithms, methods, functions, processes, flows, and procedures as described in this disclosure, according to one or more embodiments. The illustrated computer (1002) is intended to encompass any computing device such as a server, desktop computer, laptop/notebook computer, wireless data port, smart phone, personal data assistant (PDA), tablet computing device, one or more processors within these devices, or any other suitable processing device, including both physical or virtual instances (or both) of the computing device. Additionally, the computer (1002) may include a computer that includes an input device, such as a keypad, keyboard, touch screen, or other device that can accept user information, and an output device that conveys information associated with the operation of the computer (1002), including digital data, visual, or audio information (or a combination of information), or a GUI.

The computer (1002) can serve in a role as a client, network component, a server, a database or other persistency, or any other component (or a combination of roles) of a computer system for performing the subject matter described in the instant disclosure. The illustrated computer (1002) is communicably coupled with a network (1030). In some implementations, one or more components of the computer (1002) may be configured to operate within environments, including cloud-computing-based, local, global, or other environment (or a combination of environments).

At a high level, the computer (1002) is an electronic computing device operable to receive, transmit, process, store, or manage data and information associated with the described subject matter. According to some implementations, the computer (1002) may also include or be communicably coupled with an application server, e-mail server, web server, caching server, streaming data server, business intelligence (BI) server, or other server (or a combination of servers).

The computer (1002) can receive requests over network (1030) from a client application (for example, executing on another computer (1002)) and responding to the received requests by processing the said requests in an appropriate software application. In addition, requests may also be sent to the computer (1002) from internal users (for example, from a command console or by other appropriate access method), external or third-parties, other automated applications, as well as any other appropriate entities, individuals, systems, or computers.

Each of the components of the computer (1002) can communicate using a system bus (1003). In some implementations, any or all of the components of the computer (1002), both hardware or software (or a combination of hardware and software), may interface with each other or the interface (1004) (or a combination of both) over the system bus (1003) using an application programming interface (API) (1012) or a service layer (1013) (or a combination of the API (1012) and service layer (1013). The API (1012) may include specifications for routines, data structures, and object classes. The API (1012) may be either computer-language independent or dependent and refer to a complete interface, a single function, or even a set of APIs. The service layer (1013) provides software services to the computer (1002) or other components (whether or not illustrated) that are communicably coupled to the computer (1002). The functionality of the computer (1002) may be accessible for all service consumers using this service layer. Software services, such as those provided by the service layer (1013), provide reusable, defined business functionalities through a defined interface. For example, the interface may be software written in JAVA, C++, or other suitable language providing data in extensible markup language (XML) format or another suitable format. While illustrated as an integrated component of the computer (1002), alternative implementations may illustrate the API (712) or the service layer (1013) as stand-alone components in relation to other components of the computer (1002) or other components (whether or not illustrated) that are communicably coupled to the computer (1002). Moreover, any or all parts of the API (1012) or the service layer (1013) may be implemented as child or sub-modules of another software module, enterprise application, or hardware module without departing from the scope of the invention as defined by the claims.

The computer (1002) includes an interface (1004). Although illustrated as a single interface (1004) in FIG. 10, two or more interfaces (1004) may be used according to particular needs, desires, or particular implementations of the computer (1002). The interface (1004) is used by the computer (1002) for communicating with other systems in a distributed environment that are connected to the network (1030). Generally, the interface (1004) includes logic encoded in software or hardware (or a combination of software and hardware) and operable to communicate with the network (1030). More specifically, the interface (1004) may include software supporting one or more communication protocols, such as the Wellsite Information Transfer Specification (WITS) protocol, associated with communications such that the network (1030) or interface's hardware is operable to communicate physical signals within and outside of the illustrated computer (1002).

The computer (1002) includes at least one computer processor (1005). Although illustrated as a single computer processor (1005) in FIG. 10, two or more processors may be used according to particular needs, desires, or particular implementations of the computer (1002). Generally, the computer processor (1005) executes instructions and manipulates data to perform the operations of the computer (1002) and any algorithms, methods, functions, processes, flows, and procedures as described in the instant disclosure.

The computer (1002) also includes a memory (1006) that holds data for the computer (1002) or other components (or a combination of both) that can be connected to the network (1030). For example, memory (1006) can be a database storing data consistent with this disclosure. Although illustrated as a single memory (1006) in FIG. 10, two or more memories may be used according to particular needs, desires, or particular implementations of the computer (1002) and the described functionality. While memory (1006) is illustrated as an integral component of the computer (1002), in alternative implementations, memory (1006) can be external to the computer (1002).

The application (1007) is an algorithmic software engine providing functionality according to particular needs, desires, or particular implementations of the computer (1002), particularly with respect to functionality described in this disclosure. For example, application (1007) can serve as one or more components, modules, applications, etc. Further, although illustrated as a single application (1007), the application (1007) may be implemented as multiple applications (1007) on the computer (1002). In addition, although illustrated as integral to the computer (1002), in alternative implementations, the application (1007) can be external to the computer (1002).

There may be any number of computers (1002) associated with, or external to, a computer system containing a computer (1002), wherein each computer (1002) communicates over network (1030). Further, the term "client," "user," and other appropriate terminology may be used interchangeably as appropriate without departing from the scope of the invention as defined by the claims. Moreover, this disclosure contemplates that many users may use one computer (1002), or that one user may use multiple computers (1002).

Although only a few example embodiments have been described in detail above, those skilled in the art will readily appreciate that many modifications are possible in the example embodiments without materially departing from scope of the the invention as defined by the appended claims.

## Claims

1. A computer-implemented method (800), comprising:
obtaining (802) an observed stratigraphic thickness map (400) for a geological region of interest, wherein the observed stratigraphic thickness map reflects observed thicknesses of stratigraphic layers obtained from measured field data of the geological region of interest;
obtaining (804) an initial bathymetry map and an initial subsidence sequence for a model of the geological region of interest, wherein the model comprises a plurality of cells (502) each representing a geographically contiguous portion of the geological region, wherein the initial subsidence sequence comprises a subsidence rate for each cell (502);
iteratively or recursively, until a stopping criterion is met:
simulating (808), using a forward stratigraphic modeler, a predicted stratigraphic thickness map for each cell (502) based on the initial subsidence sequence;
forming (810) an objective function for each cell (502) based, at least in part, on the observed stratigraphic thickness map (400) and the predicted stratigraphic thickness map,
determining (812) if the objective function for each cell (502) satisfies the stopping criterion, wherein cells (502) that satisfy the stopping criterion leave the iterative loop (806); and
updating (814) the subsidence sequence for cells (502) not satisfying the stopping criterion; and
assigning the subsidence sequence for cells (502) satisfying the stopping criterion to be a validated subsidence sequence;
terminating the iterative loop (806) when all the cells (502) have satisfied the stopping criterion and when the subsidence sequence for all the cells have been assigned to be the validated subsidence sequence; and
assigning the predicted stratigraphic map to be a calibrated stratigraphic map,
wherein the stopping criterion is a predetermined value of the objective function or a rate of change of the objective function from a preceding iteration of the iteration loop (806).

2. The method of claim 1, further comprising planning a wellbore trajectory using a wellbore planning system (152; 950) based, at least in part, on the calibrated stratigraphic map., and, optionally, further comprising drilling a wellbore (104) based, at least in part, on the planned wellbore trajectory using a drilling system (110; 950).

3. The method of any one of claims 1 to 2, wherein the observed stratigraphic thickness map (400) comprises at least one of a sediment thickness, or sediment type.

4. The method of any one of claims 1 to 3, wherein the objective function further comprises a difference between the observed stratigraphic thickness map (400) and the predicted stratigraphic thickness map, and, optionally, wherein the difference comprises a least-squares difference.

5. The method of claim 1, wherein updating the subsidence sequence comprises:
multiplying the subsidence rate for each cell (502) by a spatially varying parameter, wherein the spatially varying parameter has a different value for each cell (502); and
adding a mean subsidence parameter, wherein the mean subsidence parameter is common to all cells (502).

6. A non-transitory computer readable memory, having computer-executable instructions stored thereon that, when executed by a processor, perform steps comprising:
receiving (802) an observed stratigraphic thickness map (400) for a geological region of interest, wherein the observed stratigraphic thickness map reflects observed thicknesses of stratigraphic layers obtained from measured field data of the geological region of interest;
receiving (804) an initial bathymetry map and an initial subsidence sequence for a model of the geological region of interest, wherein the model comprises a plurality of cells (502) each representing a geographically contiguous portion of the geological region, wherein the initial subsidence sequence comprises a subsidence rate for each cell (502);
iteratively or recursively, until a stopping criterion is met:
simulating (808), using a forward stratigraphic modeler, a predicted stratigraphic thickness map for each cell (502) based on the initial subsidence sequence;
forming (810) an objective function for each cell (502) based, at least in part, on the observed stratigraphic thickness map (400) and the predicted stratigraphic thickness map,
determining (812) if the objective function for each cell (502) satisfies the stopping criterion, and
updating (814) the subsidence sequence for cells (502) not satisfying the stopping criterion; and
assigning the subsidence sequence for cells (502) satisfying the stopping criterion to be a validated subsidence sequence, wherein cells (502) that satisfy the stopping criterion leave the iterative loop (806);
terminating the iterative loop (806) when all the cells (502) have satisfied the stopping criterion and moved to the validated subsidence sequence; and
assigning the predicted stratigraphic map to be a calibrated stratigraphic map,
wherein the stopping criterion is a predetermined value of the objective function or a rate of change of the objective function from a preceding iteration of the iteration loop (806).

7. The non-transitory computer readable memory of claim 6, wherein the steps further comprise planning a wellbore trajectory based, at least in part, on the calibrated stratigraphic map.

8. The non-transitory computer readable memory of claim 6 or 7, wherein the observed stratigraphic thickness map (400) comprises at least one of a sediment thickness, or sediment type.

9. The non-transitory computer readable memory of any one of claims 6 to 8, wherein the objective function further comprises a difference between the observed stratigraphic thickness map (400) and the predicted stratigraphic thickness map.

10. The non-transitory computer readable memory of claim 6, wherein updating the subsidence sequence comprises:
multiplying the subsidence rate for each cell (502) by a spatially varying parameter, wherein the spatially varying parameter has a different value for each cell (502); and adding a mean subsidence parameter, wherein the mean subsidence parameter is common to all cells (502).

11. A system comprising:
an inverse stratigraphic modeler, configured to:
obtain (802) an observed stratigraphic thickness map (400) for a geological region of interest, wherein the observed stratigraphic thickness map reflects observed thicknesses of stratigraphic layers obtained from measured field data of the geological region of interest;
obtain (804) an initial bathymetry map and an initial subsidence sequence for a model of the geological region of interest, wherein the model comprises a plurality of cells (502) each representing a geographically contiguous portion of the geological region, wherein the initial subsidence sequence comprises a subsidence rate for each cell (502);
iteratively or recursively, until a stopping criterion is met:
simulate (808), using a forward stratigraphic modeler, a predicted stratigraphic thickness map for each cell (502) based on the initial subsidence sequence,
form (810) an objective function for each cell (502) based, at least in part, on the observed stratigraphic thickness map (400) and the predicted stratigraphic thickness map;
determine (812) if the objective function for each cell (502) satisfies the stopping criterion; and
update (814) the subsidence sequence for cells (502) not satisfying the stopping criterion, and
assign the subsidence sequence for cells (502) satisfying the stopping criterion to be a validated subsidence sequence, wherein cells (502) that satisfy the stopping criterion leave the iterative loop (806);
terminate the iterative loop (806) when all the cells (502) have satisfied the stopping criterion and moved to the validated subsidence sequence; and
assign the predicted stratigraphic map to be a calibrated stratigraphic map, wherein the stopping criterion is a predetermined value of the objective function or a rate of change of the objective function from a preceding iteration of the iteration loop (806); and
a wellbore planning system (152; 950), configured to plan a planned wellbore trajectory based, at least in part, on the calibrated stratigraphic map.

12. The system of claim 11, further comprising a drilling system (110) configured to drill a wellbore guided by the planned wellbore trajectory.

13. The system of claim 11 or 12, wherein the observed stratigraphic thickness map (400) comprises at least one of a sediment thickness, or sediment type.

14. The system of any one of claims 11 to 13, wherein the objective function further comprises a difference between the observed stratigraphic thickness map (400) and the predicted stratigraphic thickness map.

15. The system of claim 11, wherein updating the subsidence sequence comprises:
multiplying the subsidence rate for each cell (502) by a spatially varying parameter, wherein the spatially varying parameter has a different value for each cell (502); and adding a mean subsidence parameter, wherein the mean subsidence parameter is common to all cells (502).

## Patentansprüche

1. Ein computerimplementiertes Verfahren (800), aufweisend:
Erhalten (802) einer beobachteten stratigraphischen Dickenkarte (400) für eine geologische Region von Interesse, wobei die beobachtete stratigraphische Dickenkarte beobachtete Dicken von stratigraphischen Schichten widerspiegelt, die aus gemessenen Felddaten der geologischen Region von Interesse erhalten wurden;
Erhalten (804) einer anfänglichen Bathymetriekarte und einer anfänglichen Subsidenzsequenz für ein Modell der geologischen Region von Interesse, wobei das Modell eine Vielzahl von Zellen (502) umfasst, die jeweils einen geografisch angrenzenden Teil der geologischen Region repräsentieren, wobei die anfängliche Subsidenzsequenz für jede Zelle (502) eine Subsidenzrate umfasst;
iterativ oder rekursiv, bis ein Abbruchkriterium erfüllt ist:
Simulieren (808) unter Verwendung eines Vorwärts-Stratigraphiemodellierers einer vorhergesagten stratigraphischen Dickenkarte für jede Zelle (502) basierend auf der anfänglichen Subsidenzsequenz;
Bilden (810) einer Zielfunktion für jede Zelle (502) basierend zumindest teilweise auf der beobachteten stratigraphischen Dickenkarte (400) und der vorhergesagten stratigraphischen Dickenkarte,
Bestimmen (812), ob die Zielfunktion für jede Zelle (502) das Abbruchkriterium erfüllt, wobei Zellen (502), die das Abbruchkriterium erfüllen, die iterative Schleife (806) verlassen; und
Aktualisieren (814) der Subsidenzsequenz für Zellen (502), die das Abbruchkriterium nicht erfüllen; und
Zuweisen der Subsidenzsequenz für Zellen (502), die das Abbruchkriterium erfüllen, als eine validierte Subsidenzsequenz;
Beenden der iterativen Schleife (806), wenn alle Zellen (502) das Abbruchkriterium erfüllt haben und wenn die Subsidenzsequenz für alle Zellen als die validierte Subsidenzsequenz zugewiesen worden ist; und
Zuweisen der vorhergesagten stratigraphischen Karte als eine kalibrierte stratigraphische Karte,
wobei das Abbruchkriterium ein vorbestimmter Wert der Zielfunktion oder eine Änderungsrate der Zielfunktion aus einer vorhergehenden Iteration der iterativen Schleife (806) ist.

2. Das Verfahren gemäß Anspruch 1, ferner aufweisend Planen einer Bohrlochtrajektorie unter Verwendung eines Bohrlochplanungssystems (152; 950) basierend zumindest teilweise auf der kalibrierten stratigraphischen Karte, und optional ferner aufweisend Bohren eines Bohrlochs (104) basierend zumindest teilweise auf der geplanten Bohrlochtrajektorie unter Verwendung eines Bohrsystems (110; 950).

3. Das Verfahren nach einem der Ansprüche 1 bis 2, wobei die beobachtete stratigraphische Dickenkarte (400) mindestens eine von einer Sedimentdicke oder einem Sedimenttyp umfasst.

4. Das Verfahren nach einem der Ansprüche 1 bis 3, wobei die Zielfunktion ferner eine Differenz zwischen der beobachteten stratigraphischen Dickenkarte (400) und der vorhergesagten stratigraphischen Dickenkarte umfasst, und optional wobei die Differenz eine Kleinste-Quadrate-Differenz umfasst.

5. Das Verfahren gemäß Anspruch 1, wobei das Aktualisieren der Subsidenzsequenz umfasst:
Multiplizieren der Subsidenzrate für jede Zelle (502) mit einem räumlich variierenden Parameter, wobei der räumlich variierende Parameter für jede Zelle (502) einen unterschiedlichen Wert aufweist; und
Addieren eines mittleren Subsidenzparameters, wobei der mittlere Subsidenzparameter allen Zellen (502) gemeinsam ist.

6. Ein nichtflüchtiger computerlesbarer Speicher, auf dem computer-ausführbare Anweisungen gespeichert sind, die, wenn sie von einem Prozessor ausgeführt werden, Schritte durchführen, aufweisend:
Erhalten (802) einer beobachteten stratigraphischen Dickenkarte (400) für eine geologische Region von Interesse, wobei die beobachtete stratigraphische Dickenkarte beobachtete Dicken von stratigraphischen Schichten widerspiegelt, die aus gemessenen Felddaten der geologischen Region von Interesse erhalten wurden;
Erhalten (804) einer anfänglichen Bathymetriekarte und einer anfänglichen Subsidenzsequenz für ein Modell der geologischen Region von Interesse, wobei das Modell eine Vielzahl von Zellen (502) umfasst, die jeweils einen geografisch angrenzenden Teil der geologischen Region repräsentieren, wobei die anfängliche Subsidenzsequenz für jede Zelle (502) eine Subsidenzrate umfasst;
iterativ oder rekursiv, bis ein Abbruchkriterium erfüllt ist:
Simulieren (808) unter Verwendung eines Vorwärts-Stratigraphiemodellierers einer vorhergesagten stratigraphischen Dickenkarte für jede Zelle (502) basierend auf der anfänglichen Subsidenzsequenz;
Bilden (810) einer Zielfunktion für jede Zelle (502) basierend zumindest teilweise auf der beobachteten stratigraphischen Dickenkarte (400) und der vorhergesagten stratigraphischen Dickenkarte,
Bestimmen (812), ob die Zielfunktion für jede Zelle (502) das Abbruchkriterium erfüllt, und
Aktualisieren (814) der Subsidenzsequenz für Zellen (502), die das Abbruchkriterium nicht erfüllen; und
Zuweisen der Subsidenzsequenz für Zellen (502), die das Abbruchkriterium erfüllen, als eine validierte Subsidenzsequenz, wobei Zellen (502), die das Abbruchkriterium erfüllen, die iterative Schleife (806) verlassen;
Beenden der iterativen Schleife (806), wenn alle Zellen (502) das Abbruchkriterium erfüllt haben und in die validierte Subsidenzsequenz überführt worden sind; und
Zuweisen der vorhergesagten stratigraphischen Karte als eine kalibrierte stratigraphische Karte,
wobei das Abbruchkriterium ein vorbestimmter Wert der Zielfunktion oder eine Änderungsrate der Zielfunktion aus einer vorhergehenden Iteration der iterativen Schleife (806) ist.

7. Der nichtflüchtige computerlesbare Speicher gemäß Anspruch 6, wobei die Schritte ferner das Planen einer Bohrlochtrajektorie umfassen basierend zumindest teilweise auf der kalibrierten stratigraphischen Karte.

8. Der nichtflüchtige computerlesbare Speicher gemäß Anspruch 6 oder 7, wobei die beobachtete stratigraphische Dickenkarte (400) mindestens eine von einer Sedimentdicke oder einem Sedimenttyp umfasst.

9. Der nichtflüchtige computerlesbare Speicher nach einem der Ansprüche 6 bis 8, wobei die Zielfunktion ferner eine Differenz zwischen der beobachteten stratigraphischen Dickenkarte (400) und der vorhergesagten stratigraphischen Dickenkarte umfasst.

10. Der nichtflüchtige computerlesbare Speicher gemäß Anspruch 6, wobei das Aktualisieren der Subsidenzsequenz umfasst:
Multiplizieren der Subsidenzrate für jede Zelle (502) mit einem räumlich variierenden Parameter, wobei der räumlich variierende Parameter für jede Zelle (502) einen unterschiedlichen Wert aufweist; und
Addieren eines mittleren Subsidenzparameters, wobei der mittlere Subsidenzparameter allen Zellen (502) gemeinsam ist.

11. Ein System, aufweisend:
einen inversen Stratigraphiemodellierer, eingerichtet zum:
Erhalten (802) einer beobachteten stratigraphischen Dickenkarte (400) für eine geologische Region von Interesse, wobei die beobachtete stratigraphische Dickenkarte beobachtete Dicken von stratigraphischen Schichten widerspiegelt, die aus gemessenen Felddaten der geologischen Region von Interesse erhalten wurden;
Erhalten (804) einer anfänglichen Bathymetriekarte und einer anfänglichen Subsidenzsequenz für ein Modell der geologischen Region von Interesse, wobei das Modell eine Vielzahl von Zellen (502) umfasst, die jeweils einen geografisch angrenzenden Teil der geologischen Region repräsentieren, wobei die anfängliche Subsidenzsequenz für jede Zelle (502) eine Subsidenzrate umfasst;
iterativ oder rekursiv, bis ein Abbruchkriterium erfüllt ist:
Simulieren (808) unter Verwendung eines Vorwärts-Stratigraphiemodellierers einer vorhergesagten stratigraphischen Dickenkarte für jede Zelle (502) basierend auf der anfänglichen Subsidenzsequenz,
Bilden (810) einer Zielfunktion für jede Zelle (502) basierend zumindest teilweise auf der beobachteten stratigraphischen Dickenkarte (400) und der vorhergesagten stratigraphischen Dickenkarte;
Bestimmen (812), ob die Zielfunktion für jede Zelle (502) das Abbruchkriterium erfüllt; und
Aktualisieren (814) der Subsidenzsequenz für Zellen (502), die das Abbruchkriterium nicht erfüllen, und
Zuweisen der Subsidenzsequenz für Zellen (502), die das Abbruchkriterium erfüllen, als eine validierte Subsidenzsequenz, wobei Zellen (502), die das Abbruchkriterium erfüllen, die iterative Schleife (806) verlassen;
Beenden der iterativen Schleife (806), wenn alle Zellen (502) das Abbruchkriterium erfüllt haben und in die validierte Subsidenzsequenz überführt worden sind; und
Zuweisen der vorhergesagten stratigraphischen Karte als eine kalibrierte stratigraphische Karte, wobei das Abbruchkriterium ein vorbestimmter Wert der Zielfunktion oder eine Änderungsrate der Zielfunktion aus einer vorhergehenden Iteration der iterativen Schleife (806) ist; und
ein Bohrlochplanungssystem (152; 950), eingerichtet zum Planen einer geplanten Bohrlochtrajektorie basierend zumindest teilweise auf der kalibrierten stratigraphischen Karte.

12. Das System gemäß Anspruch 11, ferner aufweisend ein Bohrsystem (110), das dazu eingerichtet ist, ein Bohrloch entlang der geplanten Bohrlochtrajektorie zu bohren.

13. Das System gemäß Anspruch 11 oder 12, wobei die beobachtete stratigraphische Dickenkarte (400) mindestens eine von einer Sedimentdicke oder einem Sedimenttyp umfasst.

14. Das System nach einem der Ansprüche 11 bis 13, wobei die Zielfunktion ferner eine Differenz zwischen der beobachteten stratigraphischen Dickenkarte (400) und der vorhergesagten stratigraphischen Dickenkarte umfasst.

15. Das System gemäß Anspruch 11, wobei das Aktualisieren der Subsidenzsequenz umfasst:
Multiplizieren der Subsidenzrate für jede Zelle (502) mit einem räumlich variierenden Parameter, wobei der räumlich variierende Parameter für jede Zelle (502) einen unterschiedlichen Wert aufweist; und
Addieren eines mittleren Subsidenzparameters, wobei der mittlere Subsidenzparameter allen Zellen (502) gemeinsam ist.

## Revendications

1. Procédé mis en œuvre par ordinateur (800), comprenant :
obtenir (802) une carte observée d'épaisseur stratigraphique (400) pour une région géologique d'intérêt, dans laquelle la carte observée d'épaisseur stratigraphique reflète des épaisseurs observées de couches stratigraphiques obtenues à partir de données de terrain mesurées de la région géologique d'intérêt ;
obtenir (804) une carte bathymétrique initiale et une séquence initiale de subsidence pour un modèle de la région géologique d'intérêt, dans lequel le modèle comprend une pluralité de cellules (502) chacune représentant une portion géographiquement contiguë de la région géologique, dans lequel la séquence initiale de subsidence comprend un taux de subsidence pour chaque cellule (502) ;
de manière itérative ou récursive, jusqu'à ce qu'un critère d'arrêt soit satisfait simuler (808), à l'aide d'un modélisateur stratigraphique direct, une carte prédite d'épaisseur stratigraphique pour chaque cellule (502) sur la base de la séquence initiale de subsidence ;
former (810) une fonction objectif pour chaque cellule (502) sur la base, au moins en partie, de la carte observée d'épaisseur stratigraphique (400) et de la carte prédite d'épaisseur stratigraphique,
déterminer (812) si la fonction objectif pour chaque cellule (502) satisfait le critère d'arrêt, dans lequel les cellules (502) qui satisfont le critère d'arrêt quittent la boucle itérative (806) ; et
mettre à jour (814) la séquence de subsidence pour les cellules (502) ne satisfaisant pas le critère d'arrêt ; et
attribuer la séquence de subsidence pour les cellules (502) satisfaisant le critère d'arrêt comme étant une séquence de subsidence validée ;
terminer la boucle itérative (806) lorsque toutes les cellules (502) ont satisfait le critère d'arrêt et lorsque la séquence de subsidence pour toutes les cellules a été attribuée comme étant la séquence de subsidence validée ; et
attribuer la carte stratigraphique prédite comme étant une carte stratigraphique calibrée,
dans lequel le critère d'arrêt est une valeur prédéterminée de la fonction objectif ou un taux de variation de la fonction objectif par rapport à une itération précédente de la boucle d'itération (806).

2. Le procédé selon la revendication 1, comprenant en outre planifier une trajectoire de puits de forage à l'aide d'un système de planification de puits de forage (152 ; 950) sur la base, au moins en partie, de la carte stratigraphique calibrée, et, en option, comprenant en outre forer un puits de forage (104) sur la base, au moins en partie, de la trajectoire de puits planifiée à l'aide d'un système de forage (110 ; 950).

3. Le procédé selon l'une quelconque des revendications 1 à 2, dans lequel la carte observée d'épaisseur stratigraphique (400) comprend au moins l'un parmi une épaisseur de sédiment ou un type de sédiment.

4. Le procédé selon l'une quelconque des revendications 1 à 3, dans lequel la fonction objectif comprend en outre une différence entre la carte observée d'épaisseur stratigraphique (400) et la carte prédite d'épaisseur stratigraphique, et, en option, dans lequel la différence comprend une différence au sens des moindres carrés.

5. Le procédé selon la revendication 1, dans lequel la mise à jour de la séquence de subsidence comprend :
multiplier le taux de subsidence pour chaque cellule (502) par un paramètre variant spatialement,
dans lequel le paramètre variant spatialement a une valeur différente pour chaque cellule (502) ; et
ajouter un paramètre moyen de subsidence, dans lequel le paramètre moyen de subsidence est commun à toutes les cellules (502).

6. Mémoire lisible par ordinateur non transitoire, comportant des instructions exécutables par ordinateur stockées dessus qui, lorsqu'elles sont exécutées par un processeur, exécutent des étapes comprenant :
recevoir (802) une carte observée d'épaisseur stratigraphique (400) pour une région géologique d'intérêt, dans laquelle la carte observée d'épaisseur stratigraphique reflète des épaisseurs observées de couches stratigraphiques obtenues à partir de données de terrain mesurées de la région géologique d'intérêt ; recevoir (804) une carte bathymétrique initiale et une séquence initiale de subsidence pour un modèle de la région géologique d'intérêt, dans lequel le modèle comprend une pluralité de cellules (502) chacune représentant une portion géographiquement contiguë de la région géologique, dans lequel la séquence initiale de subsidence comprend un taux de subsidence pour chaque cellule (502) ;
de manière itérative ou récursive, jusqu'à ce qu'un critère d'arrêt soit satisfait :
simuler (808), à l'aide d'un modélisateur stratigraphique direct, une carte prédite d'épaisseur stratigraphique pour chaque cellule (502) sur la base de la séquence initiale de subsidence ;
former (810) une fonction objectif pour chaque cellule (502) sur la base, au moins en partie, de la carte observée d'épaisseur stratigraphique (400) et de la carte prédite d'épaisseur stratigraphique,
déterminer (812) si la fonction objectif pour chaque cellule (502) satisfait le critère d'arrêt, et
mettre à jour (814) la séquence de subsidence pour les cellules (502) ne satisfaisant pas le critère d'arrêt ; et
attribuer la séquence de subsidence pour les cellules (502) satisfaisant le critère d'arrêt comme étant une séquence de subsidence validée, dans lequel les cellules (502) qui satisfont le critère d'arrêt quittent la boucle itérative (806) ;
terminer la boucle itérative (806) lorsque toutes les cellules (502) ont satisfait le critère d'arrêt et ont été transférées vers la séquence de subsidence validée; et
attribuer la carte stratigraphique prédite comme étant une carte stratigraphique calibrée,
dans lequel le critère d'arrêt est une valeur prédéterminée de la fonction objectif ou un taux de variation de la fonction objectif par rapport à une itération précédente de la boucle d'itération (806).

7. La mémoire lisible par ordinateur non transitoire selon la revendication 6, dans laquelle les étapes comprennent en outre planifier une trajectoire de puits de forage sur la base, au moins en partie, de la carte stratigraphique calibrée.

8. La mémoire lisible par ordinateur non transitoire selon la revendication 6 ou 7, dans laquelle la carte observée d'épaisseur stratigraphique (400) comprend au moins l'un parmi une épaisseur de sédiment ou un type de sédiment.

9. La mémoire lisible par ordinateur non transitoire selon l'une quelconque des revendications 6 à 8, dans laquelle la fonction objectif comprend en outre une différence entre la carte observée d'épaisseur stratigraphique (400) et la carte prédite d'épaisseur stratigraphique.

10. La mémoire lisible par ordinateur non transitoire selon la revendication 6, dans laquelle la mise à jour de la séquence de subsidence comprend :
multiplier le taux de subsidence pour chaque cellule (502) par un paramètre variant
spatialement, dans lequel le paramètre variant spatialement a une valeur différente pour chaque cellule (502) ;
et ajouter un paramètre moyen de subsidence, dans lequel le paramètre moyen de subsidence est commun à toutes les cellules (502).

11. Système comprenant :
un modélisateur stratigraphique inverse, configuré pour :
obtenir (802) une carte observée d'épaisseur stratigraphique (400) pour une région géologique d'intérêt, dans laquelle la carte observée d'épaisseur stratigraphique reflète des épaisseurs observées de couches stratigraphiques obtenues à partir de données de terrain mesurées de la région géologique d'intérêt ;
obtenir (804) une carte bathymétrique initiale et une séquence initiale de subsidence pour un modèle de la région géologique d'intérêt, dans lequel le modèle comprend une pluralité de cellules (502) chacune représentant une portion géographiquement contiguë de la région géologique, dans lequel la séquence initiale de subsidence comprend un taux de subsidence pour chaque cellule (502) ;
de manière itérative ou récursive, jusqu'à ce qu'un critère d'arrêt soit satisfait :
simuler (808), à l'aide d'un modélisateur stratigraphique direct, une carte
prédite d'épaisseur stratigraphique pour chaque cellule (502) sur la base de la séquence initiale de subsidence,
former (810) une fonction objectif pour chaque cellule (502) sur la base, au moins en partie, de la carte observée d'épaisseur stratigraphique (400) et de la carte prédite d'épaisseur stratigraphique ;
déterminer (812) si la fonction objectif pour chaque cellule (502) satisfait le critère d'arrêt ; et
mettre à jour (814) la séquence de subsidence pour les cellules (502) ne satisfaisant pas le critère d'arrêt, et
attribuer la séquence de subsidence pour les cellules (502) satisfaisant le critère d'arrêt comme étant une séquence de subsidence validée, dans lequel les cellules (502) qui satisfont le critère d'arrêt quittent la boucle itérative (806) ;
terminer la boucle itérative (806) lorsque toutes les cellules (502) ont satisfait le critère d'arrêt et ont été transférées vers la séquence de subsidence validée ; et
attribuer la carte stratigraphique prédite comme étant une carte stratigraphique calibrée, dans lequel le critère d'arrêt est une valeur prédéterminée de la fonction objectif ou un taux de variation de la fonction objectif par rapport à une itération précédente de la boucle d'itération (806) ; et
un système de planification de puits de forage (152 ; 950), configuré pour planifier une trajectoire de puits de forage planifiée sur la base, au moins en partie, de la carte stratigraphique calibrée.

12. Le système selon la revendication 11, comprenant en outre un système de forage (110) configuré pour forer un puits de forage guidé par la trajectoire de puits de forage planifiée.

13. Le système selon la revendication 11 ou 12, dans lequel la carte observée d'épaisseur stratigraphique (400) comprend au moins l'un parmi une épaisseur de sédiment ou un type de sédiment.

14. Le système selon l'une quelconque des revendications 11 à 13, dans lequel la fonction objectif comprend en outre une différence entre la carte observée d'épaisseur stratigraphique (400) et la carte prédite d'épaisseur stratigraphique.

15. Le système selon la revendication 11, dans lequel la mise à jour de la séquence de subsidence comprend :
multiplier le taux de subsidence pour chaque cellule (502) par un paramètre
variant spatialement, dans lequel le paramètre variant spatialement a une valeur différente pour chaque cellule (502) ;
et ajouter un paramètre moyen de subsidence, dans lequel le paramètre moyen de subsidence est commun à toutes les cellules (502).
